# EUROPEAN PATENT APPLICATION

(11) **EP 4 434 956 A1**
(43) Date of publication of application: **25.09.2024**
(21) Application number: 24164939.1
(22) Date of filing: 20.03.2024
(51) Int. Cl.: C04B 41/00, C04B 41/50, C04B 41/52, C04B 41/89, F16D 69/02, C04B 111/00

(54) **SELF HEALING OPS THROUGH VISCOSITY LOWERING**

(30) Priority: 20.03.2023 US 202318186844
(71) Applicant: Goodrich Corporation, Charlotte, NC 28217-4578 (US)
(72) Inventor: DING, Zhongfen, South Windsor, CT, 06074 (US); POTEET, Steven, Lake Forest, CA, 92630 (US); MILLER, Michael, Glastonbury, CT, 06033 (US); COLLIER, Virginia E., Fountain, CO, 80817 (US); TANG, Xia, West Hartford, CT (US); JACKSON III, Richard Wesley, Mystic, CT (US)
(74) Representative: Dehns

(57) **Abstract**

A method for forming an oxidation protection system on a carbon-carbon composite structure comprises applying (220) a boron slurry to the carbon-carbon composite structure, wherein the boron slurry comprises a boron composition, a first glass compound, a first glass former, a first glass modifier, and a first carrier fluid, the boron composition including a first metal boride, applying (240) a silicon slurry to the carbon-carbon composite structure, wherein the silicon slurry comprises a silicon compound, a glass compound, a second glass former, a second glass modifier, an oxygen inhibitor, and a second carrier fluid; and heating (250) the carbon-carbon composite structure.

## Description

### FIELD

The present disclosure relates generally to composites and, more specifically, to oxidation protection systems for carbon-carbon composite structures.

### BACKGROUND

Oxidation protection systems for carbon-carbon composites are typically designed to minimize loss of carbon material due to oxidation at high temperature operating conditions, which include temperatures of 427°C (800°F) or greater. Carbon-carbon composites have high specific strength, ranging from low to very high temperatures. However, carbon-carbon composites are intrinsically prone to oxidation in ambient environment to form carbon monoxide and carbon dioxide gases, losing mass and strength. An oxidation protection system (OPS) facilitates increased life cycles for carbon-carbon composite components, especially when used in high temperature applications.

OPS coatings protect C/C composites from oxidation damage through forming a barrier to block oxygen diffusion into the C/C substrate, in addition, an oxygen gettering phase is incorporated in the coating structure to remove O₂ molecules that diffused into the coating through fine cracks and defects.

Ceramic coatings are often brittle and have limited in operating temperature range where the coating performs best. One coating may perform very well at 1000 °F - 1300 °F, but may degrade quickly at higher temperatures such as 1400 °F - 1800 °F, whereas another coating system may perform well at 1400 °F - 1800 °F, but not seal well at 800 °F - 1300 °F.

### SUMMARY

A method for forming an oxidation protection system on a carbon-carbon composite structure is disclosed herein. In various embodiments, the method comprises applying a boron slurry to the carbon-carbon composite structure, wherein the boron slurry comprises a boron composition, a first glass compound, a first glass former, a first glass modifier, and a first carrier fluid, the boron composition including a first metal boride; applying a silicon slurry to the carbon-carbon composite structure, wherein the silicon slurry comprises a silicon compound, a glass compound, a second glass former, a second glass modifier, an oxygen inhibitor, and a second carrier fluid; and heating the carbon-carbon composite structure.

In various embodiments, the oxygen inhibitor comprises a second metal boride.

In various embodiments, the first metal boride comprises 100% by weight of the boron composition.

In various embodiments, the boron composition further comprises at least one of boron carbide and boron nitride. In various embodiments, the first metal boride comprises between 25% and 100% by weight of the boron composition.

In various embodiments, the first metal boride comprises one of calcium boride (CaB₆), magnesium boride (MgB₂), silicon boride (SiB₆), titanium boride (TiB₂), zirconium boride (ZrB₂), and hafnium boride (HfB₂).

In various embodiments, the boron slurry further comprises a third glass compound that forms a glass mixture with the first glass compound, wherein the third glass compound has a viscosity-temperature profile that is at least two orders of magnitude more than the first glass compound. In various embodiments, the first glass compound includes a phosphate-based glass, and the third glass compound includes a first borosilicate glass.

In various embodiments, the glass mixture comprises a fourth glass compound, the fourth glass compound comprises a second borosilicate glass, and the second borosilicate glass has a different viscosity-temperature profile from the first borosilicate glass.

A method for forming an oxidation protection system on a brake disk is disclosed herein. In various embodiments, the method comprises forming a boron slurry by mixing a first metal boride, a first glass compound, a first glass former, a first glass modifier, and a first carrier fluid; applying the boron slurry over a non-wear surface of the brake disk; forming a silicon slurry by mixing a silicon compound, a second glass compound, a second glass former, a second glass modifier, an oxygen inhibitor, and a second carrier fluid, the oxygen inhibitor including a second metal boride; applying the silicon slurry over the non-wear surface of the brake disk; and heating the brake disk at a first temperature.

In various embodiments, the boron slurry is without boron nitride and carbon nitride.

In various embodiments, the first metal boride comprises one of calcium boride (CaB₆), magnesium boride (MgB₂), silicon boride (SiB₆), titanium boride (TiB₂), zirconium boride (ZrB₂), and hafnium boride (HfB₂).

In various embodiments, the boron slurry further comprises a third metal boride, wherein the third metal boride is different from the second metal boride.

In various embodiments, the boron slurry further comprises at least one of boron carbide and boron nitride. In various embodiments, the boron carbide, the boron nitride, and the first metal boride form a boron composition, and wherein the first metal boride comprises between 25% and 100% by weight of a boron composition.

An oxidation protection system disposed on an outer surface of a substrate is disclosed herein. In various embodiments, the oxidation protection system, comprises a boron-glass layer disposed over the outer surface, the boron-glass layer comprising a boron composition, a first glass mixture, a first glass former, and a first glass modifier, the boron composition including a first metal boride disposed therein; and a silicon-glass layer disposed on the boron-glass layer, the silicon-glass layer including a second metal boride disposed therein.

In various embodiments, the boron-glass layer further comprises at least one of boron nitride and boron carbide. In various embodiments, the first metal boride comprises between 25% and 100% by weight of a boron composition, the boron composition including the boron nitride, the boron carbide, and the first metal boride.

In various embodiments, the first metal boride comprises one of calcium boride (CaB₆), magnesium boride (MgB₂), silicon boride (SiB₆), titanium boride (TiB₂), zirconium boride (ZrB₂), and hafnium boride (HfB₂). In various embodiments, the second metal boride comprises one of calcium boride (CaB₆), magnesium boride (MgB₂), silicon boride (SiB₆), titanium boride (TiB₂), zirconium boride (ZrB₂), and hafnium boride (HfB₂).

### BRIEF DESCRIPTION OF THE DRAWINGS

The subject matter of the present disclosure is particularly pointed out and distinctly claimed in the concluding portion of the specification. A more complete understanding of the present disclosure, however, may best be obtained by referring to the detailed description and claims when considered in connection with the drawing figures, wherein like numerals denote like elements.
FIG. 1 illustrates a cross sectional view of an aircraft wheel braking assembly, in accordance with various embodiments;
FIG. 2 illustrates a method for forming an oxidation protection system on a composite structure, in accordance with various embodiments;
FIG. 3A illustrates a viscosity-temperature profile for a glass compound in a glass mixture of a sealing layer of an oxidation protection system, in accordance with various embodiments;
FIG. 3B illustrates a viscosity-temperature profile for a glass compound in a glass mixture of a sealing layer of an oxidation protection system, in accordance with various embodiments;
FIG. 3C illustrates a viscosity-temperature profile for a glass compound in a glass mixture of a sealing layer of an oxidation protection system, in accordance with various embodiments;
FIG. 4 illustrates an oxidization protection system, in accordance with various embodiments.
FIG. 5A illustrates an oxidization protection system during operation, in accordance with various embodiments; and
FIG. 5B illustrates an oxidization protection system during operation, in accordance with various embodiments.

### DETAILED DESCRIPTION

The detailed description of embodiments herein makes reference to the accompanying drawings, which show embodiments by way of illustration. While these embodiments are described in sufficient detail to enable those skilled in the art to practice the disclosure, it should be understood that other embodiments may be realized and that logical and mechanical changes may be made without departing from the spirit and scope of the disclosure. Thus, the detailed description herein is presented for purposes of illustration only and not for limitation. For example, any reference to singular includes plural embodiments, and any reference to more than one component or step may include a singular embodiment or step. Also, any reference to attached, fixed, connected or the like may include permanent, removable, temporary, partial, full and/or any other possible attachment option.

Disclosed herein is an advanced OPS that has a broad temperature capability (i.e., 800 °F (427 °C) to 1,800 °F (982 °C)) realized through design engineering of the building blocks of the coating system. By combining different types of glass as additives in the coating system, the OPS can effectively protect at a wide temperature range.

In various embodiments, the combination of different metal borides, such as CaB₆, MgB₂, SiB₆, HfB₂, LaB₆, YB₄, GdB₄, YbB₆ AlB₁₂, and/or other metal borides can be a key oxidation inhibitor (i.e., oxygen getter, as used herein oxygen getter is interchangeable with oxidation inhibitor). The metal borides can react with O₂ to form metal oxide and boria. The metal oxides can lower the viscosity of the glass matrix composed of silica and phosphates, thus softening the coating to seal the cracks.

In various embodiments, a combination of metal borides can be engineered to provide a coating formulation that can react with O₂ at different temperature ranges and effectively lower down the viscosity of the glass matrix.

In various embodiments, the OPS can have multiple layers, with the barrier layer near the substrate to provide a seal. An intermediate layer can be loaded with an O₂ getter and glass mixture that can provide a second seal and O₂ sequestration. A top layer can be more stable at higher temperature, loaded with O₂ getter and a glass mixture that softens at higher temperature.

In various embodiments, the OPS coating can self-heal as the fine cracks are formed. In various embodiments, the coating has improved oxidation protection and durability through the self-sealing of the lower viscosity glass phase formed the fine cracks. In various embodiments, O₂ gettering phase consumption generates oxides that can dissolve into the glass matrix and locally seal the spot from further O₂ diffusion (self-healing). In various embodiments, protecting carbon/carbon composite components increases service life, reduces maintenance, repair, and operation (MRO) cost, reduces production cost, and/or reduces a carbon footprint.

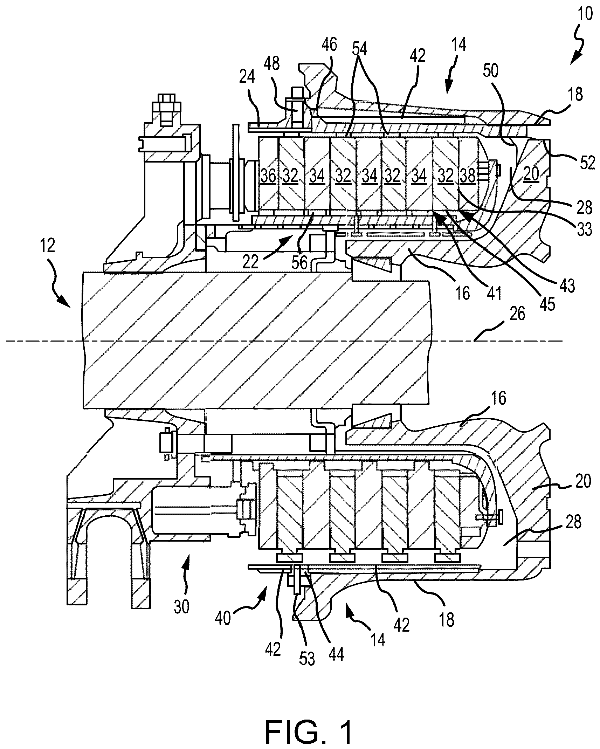

With initial reference to FIG. 1, aircraft wheel brake assembly 10 may be found on an aircraft, in accordance with various embodiments is illustrated. Aircraft wheel brake assembly may, for example, comprise a bogie axle 12, a wheel including a hub 16 and a wheel well 18, a web 20, a torque take-out assembly 22, one or more torque bars 24, a wheel rotational axis 26, a wheel well recess 28, an actuator 30, multiple brake rotors 32, multiple brake stators 34, a pressure plate 36, an end plate 38, a heat shield 40, multiple heat shield sections 42, multiple heat shield carriers 44, an air gap 46, multiple torque bar bolts 48, a torque bar pin 50, a wheel web hole 52, multiple heat shield fasteners 53, multiple rotor lugs 54, and multiple stator slots 56.

Brake disks (e.g., interleaved rotors 32 and stators 34) are disposed in wheel well recess 28 of wheel well 18. Rotors 32 are secured to torque bars 24 for rotation with wheel 14, while stators 34 are engaged with torque take-out assembly 22. At least one actuator 30 is operable to compress interleaved rotors 32 and stators 34 for stopping the aircraft. In this example, actuator 30 is shown as a hydraulically actuated piston, but many types of actuators are suitable, such as an electromechanical actuator. Pressure plate 36 and end plate 38 are disposed at opposite axial ends of the interleaved rotors 32 and stators 34. Rotors 32 and stators 34 can comprise any material suitable for friction disks, including ceramics or carbon materials, such as a carbon/carbon composite.

Through compression of interleaved rotors 32 and stators 34 between pressure plates 36 and end plate 38, the resulting frictional contact slows rotation of wheel 14. Torque take-out assembly 22 is secured to a stationary portion of the landing gear truck such as a bogie beam or other landing gear strut, such that torque take-out assembly 22 and stators 34 are prevented from rotating during braking of the aircraft.

The friction disks (e.g., rotors 32, stators 34, pressure plate 36, end plate 38) may be formed of carbon-carbon (C/C) composites having carbon fibers disposed in a carbon matrix). The C/C composites may operate as heat sinks to absorb large amounts of kinetic energy converted to heat during slowing of the aircraft. Heat shield 40 may reflect thermal energy away from wheel well 18 and back toward rotors 32 and stators 34.

In various embodiments, brake disks of aircraft wheel brake assembly 10 may reach operating temperatures in the range from about 100°C (212°F) up to about 900°C (1652°F), or higher (e.g., 1093°C (2000°F)). The high temperatures experienced by aircraft wheel brake assembly 10 can lead to loss of C/C composite material due to oxidation of carbon. For example, various C/C composite components of aircraft wheel brake assembly 10 may experience both catalytic oxidation and inherent thermal oxidation caused by heating the composite during operation. In various embodiments, rotors 32 and stators 34 may be heated to sufficiently high temperatures that may oxidize the carbon surfaces exposed to air. At elevated temperatures, infiltration of air and contaminants may cause internal oxidation and weakening, especially in and around brake rotor lugs 54 or stator slots 56 securing the friction disks to the respective torque bar 24 and torque take-out assembly 22. Because C/C composite components of aircraft wheel brake assembly 10 may retain heat for a substantial time period after slowing the aircraft, oxygen from the ambient atmosphere may react with the carbon matrix and/or carbon fibers to accelerate material loss. Further, damage to brake components may be caused by the oxidation enlargement of cracks around fibers or enlargement of cracks in a reaction-formed porous barrier coating (e.g., a silicon-based barrier coating) applied to the C/C composite.

Elements identified in severely oxidized regions of C/C composite brake components include potassium (K) and sodium (Na). These alkali contaminants may come into contact with aircraft brakes as part of cleaning or de-icing materials. Other sources include salt deposits left from seawater or sea spray. These and other contaminants (e.g., Ca, Fe, etc.) can penetrate and leave deposits in pores of C/C composite aircraft brakes, including the substrate and any reaction-formed porous barrier coating. When such contamination occurs, the rate of carbon loss by oxidation can be increased by one to two orders of magnitude.

In various embodiments, an oxidation protection system, as disclosed herein, may be applied to the various components of aircraft wheel brake assembly 10 for protecting the components from oxidation. However, it will be recognized that the oxidation protection systems and methods of forming the same, as disclosed herein, may be readily adapted to many parts in this and other brake assemblies, as well as to other C/C composite structures susceptible to oxidation losses from infiltration of atmospheric oxygen and/or catalytic contaminants.

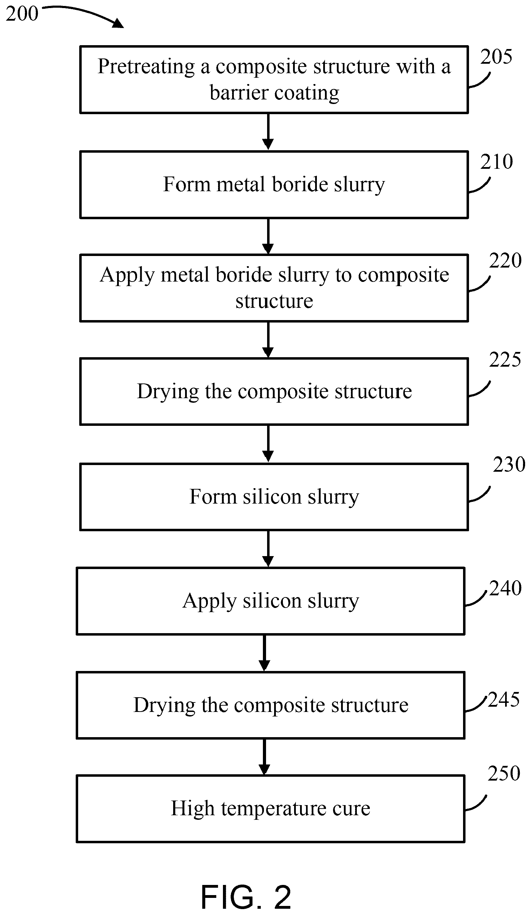

In various embodiments, a method for limiting an oxidation reaction in a substrate (e.g., a C/C composite structure) may comprise forming an oxidation protection system on the composite structure. With reference to FIG. 2, a method 200 for forming an oxidation protection system on a composite structure is illustrated. In accordance with various embodiments, method 200 may, for example, comprise applying an oxidation inhibiting composition to non-wear surfaces of C/C composite brake components, such as non-wear surfaces 45 and/or lugs 54. Non-wear surface 45, as labeled in FIG. 1, simply references an exemplary non-wear surface on a brake disk, but non-wear surfaces similar to non-wear surface 45 may be present on any brake disks (e.g., rotors 32, stators 34, pressure plate 36, end plate 38, or the like). In various embodiments, method 200 may be used on the back face of pressure plate 36 and/or end plate 38, an inner diameter (ID) surface of stators 34 including slots 56, as well as an outer diameter (OD) surface of rotors 32 including lugs 54. Method 200 may be performed on densified C/C composites. In this regard, method 200 may be performed after carbonization and densification of the C/C composite.

In various embodiments, method 200 may comprise forming a metal boride slurry (step 210). The metal boride slurry may be formed by combining a boron composition, a glass compound (or a glass mixture), a silica (SiO₂) glass former, and a glass modifier with a carrier fluid (such as, for example, water).

In various embodiments, the boron composition comprises a single metal boride compound. In various embodiments, the boron composition comprises at least two metal borides. In various embodiments, the boron composition includes a metal boride and a boron compound configured to react with oxygen to form a gas (e.g., boron carbide and/or boron nitride). In various embodiments, the boron composition comprises at least one of calcium boride (CaB₆), magnesium boride (MgB₂), silicon boride (SiB₆), titanium boride (TiB₂), zirconium boride (ZrB₂), hafnium boride (HfB₂), lanthanum boride (LaB₆), yttrium boride (YB₄), gadolinium boride (GdB₄), ytterbium boride (YbB₆), aluminum boride (AlB₁₂), and/or any other metal boride. In various embodiments, a combination of metal borides can be engineered to provide a coating formulation that can react with oxygen (O₂) at different temperature ranges and effectively lower down the viscosity of the glass matrix, in accordance with various embodiments. For example, a metal boride reacts with oxygen to form a metal oxide and boria. The metal oxide can lower the viscosity of the glass composition of the coating, and the boria can self-seal defects that form, in accordance with various embodiments.

In various embodiments, the boron slurry may comprise from about 3% to about 30% by weight boron composition, from about 5% to about 20% by weight boron composition, or from about 7% to about 18% by weight boron composition. As used in previous context only, the term "about" means ±1.0 weight percent. In various embodiments, the metal boride slurry may comprise approximately 7.4% by weight boron composition. As used in this context only, the term "approximately" means ±0.50 weight percent. In various embodiments, the boron slurry may comprise approximately 16.7% by weight boride composition. As used in this context only, the term "approximately" means ± 0.50 weight percent. In various embodiments, the boron slurry may comprise approximately 16.4% by weight boron composition. As used in this context only, the term "approximately" means ± 0.50 weight percent.

In various embodiments, the boron composition may comprise from about 25% to 100% metal boride by weight, from about 50% to 100% metal boride by weight, from about 75% to 100% metal boride by weight. As used in previous context only, the term "about" means ±1.0 weight percent. In various embodiments, the boron composition may comprise 100% by weight boron composition. In various embodiments, by having only metal boride in the boron composition of the boron slurry, the coating formed from the boron slurry will not form a gas in response to reacting with oxygen, and will instead form a metal oxide and boria, which can react with the glass composition to self-heal the coating, in accordance with various embodiments. In various embodiments, by utilizing a metal boride with either boron carbide or boron nitride, the benefits of boron carbide and/or boron nitride can be realized. Stated another way, the amount of gas evolution due to reaction with oxygen of the coating formed from the metal boride slurry can be systematically decreased by reducing an amount of boron carbide or boron nitride in the boron composition and by increasing an amount of metal boride, in accordance with various embodiments.

In various embodiments, boron composition of the metal boride slurry can further comprise a mixture of boron carbide (B₄C) powder and/or boron nitride (BN) powder. In various embodiments, the boron nitride powder is comprised of cubic boron nitride (c-BN) powder. In various embodiments, the boron nitride powder forms a greater weight percentage of the boron slurry as compared to the weight percentage formed by the boron carbide powder.

In various embodiments, the boron nitride powder may form between about 33.0% and about 95.0% of the weight percentage of the mixture of boron carbide and boron nitride. In various embodiments, the boron nitride powder may form between about 62.5% and about 76.5% of the weight percentage of the mixture of boron carbide and boron nitride. As used in previous context only, the term "about" means ±1.0 weight percent.

In various embodiments, the boron composition is a powder (e.g., metal boride(s) powder, boron carbide powder, boron nitride powder, etc.). The boron composition powder may comprise particles having an average particle size of between about 100 nm and about 100 µm, between about 500 nm and about 50 µm, between about 1 µm and about 20 µm, between about 5 µm and about 10 µm, and/or between about 500 nm and about 1 µm. As used in the previous context only, the term "about" means ± 10% of the associated value.

In various embodiments, the glass compound of the metal boride slurry may comprise borosilicate glass, borophosphate, quartz, aluminosilicate, boroaluminosilicate, and/or any other suitable glass compound. The glass compound may be in the form of a glass frit or other pulverized form. In various embodiments, the glass compound is borosilicate glass. In various embodiments, the borosilicate glass may comprise in weight percentage 13% B₂O₃, 61% SiO₂, 2% Al₂O₃, and 4% sodium oxide (Na₂O), and may have a CTE of 3.3×10⁻⁶ cm/C, a working point of 2286° F (1252° C), and an annealing point of 1040° F (560° C). In various embodiments, the metal boride slurry may comprise between about 5.0% and about 50.0% by weight glass compound, between about 10.0% and about 35.0% by weight glass compound, between about 24.0% and about 26.0% by weight glass compound, or between about 27.0% and about 29.0% by weight glass compound. As used in previous context only, the term "about" means ±1.0 weight percent.

In various embodiments, the glass mixture of the metal boride slurry comprises at least two glass compounds. For example, the glass mixture can comprise a first glass compound and a second glass compound.

The glass mixture of the metal boride slurry may comprise at least two of the following glass compounds: a phosphate-based glass, an alkaline glass, a borosilicate glass, a silicate glass (e.g., a SiO₂ based glass), an SiON glass, and/or a high-temperature melting point glass as described further herein. In various embodiments, the glass mixture of the metal boride slurry comprises a phosphate-based glass and a borosilicate glass. In various embodiments, the glass mixture comprises a phosphate-based glass, a first borosilicate glass, and a second borosilicate glass.

In various embodiments, a first glass compound in the glass mixture can comprise a viscosity temperature profile that is different from a second glass compound. In various embodiments, a viscosity at a first temperature of a first glass compound of the glass mixture is less than a viscosity at the first temperature of a second glass compound of the glass mixture by orders of magnitude. For example, a first glass compound can have a viscosity of approximately 1.0 × 10⁵ Pa·S at 1,250 °F (677 °C) and a second glass compound can have a viscosity of approximately 1 × 10⁹ Pa·S at 1,250 °F (677 °C). Similarly, the first glass compound can have a viscosity that is order of magnitudes less than the second glass compound at a second temperature. For example, the first glass compound of the glass mixture can have a viscosity at 1,650 °F (899 °C) of approximately 3.2 × 10² Pa·S and the second glass compound can have a viscosity at 1,650 °F (899 °C) of approximately 3.0 × 10⁵ Pa·S.

In various embodiments, the first glass compound of the glass mixture includes a viscosity at 1,250 °F (677 °C) between 5.0 × 10⁴ Pa·S and 5.0 × 10⁵ Pa·S, or between 7.5 × 10⁴ Pa·S and 2.5 × 10⁵ Pa·S, or approximately 1.0 × 10⁵ Pa·S. In various embodiments, the first glass compound can have a viscosity at 1,650 °F (899 °C) between 8.2 × 10¹ Pa·S and 8.2 × 10² Pa·S, or between 0.7 × 10² Pa·S and 5.7 × 10⁵ Pa·S, or approximately 3.2 × 10² Pa·S.

In various embodiments, the second glass compound of the glass mixture includes a viscosity at 1,250 °F (677 °C) between 5.0 × 10⁸ Pa·S and 5.0 × 10⁹ Pa·S, or between 7.5 × 10⁸ Pa·S and 2.5 × 10⁹ Pa·S, or approximately 1.0 × 10⁹ Pa·S. In various embodiments, the second glass compound can have a viscosity at 1,650 °F (899 °C) between 8.0 × 10⁴ Pa·S and 8.0 × 10⁵ Pa·S, or between 0.5 × 10⁵ Pa·S and 5.5 × 10⁵ Pa·S, or approximately 3.0 × 10⁵ Pa·S.

In various embodiments, by having a first glass compound with a viscosity temperature profile with a significantly lower viscosity (i.e., at least two orders of magnitude) at various temperatures relative to a viscosity temperature profile of a second glass compound, a softening viscosity of a coating made from the glass mixture can be significantly broadened. For example, a softening viscosity of a coating made from the process described herein can be within the range of 1 × 10⁴ and 1 × 10⁹ Pa·S for a wide temperature range (e.g., between 1,000 °F (538 °C) and 1,800 °F (982 °C)) as described further herein.

In various embodiments, the glass mixture can comprise a third glass compound with a viscosity temperature profile that is between the first glass compound and the second glass compound. In various embodiments, the third glass compound of the glass mixture includes a viscosity at 1,250 °F (677 °C) between 8.1 × 10⁶ Pa·S and 8.1 × 10⁷ Pa·S, or between 0.6 × 10⁷ Pa·S and 5.6 × 10⁷ Pa·S, or approximately 3.1 × 10⁷ Pa·S. In various embodiments, the third glass compound can have a viscosity at 1,650 °F (899 °C) between 5.0 × 10⁴ Pa·S and 5.0 × 10⁵ Pa·S, or between 7.5 × 10⁴ Pa·S and 2.5 × 10⁵ Pa·S, or approximately 1.0 × 10⁵ Pa·S. In various embodiments, the third glass compound can comprise a viscosity of approximately 3.1 × 10⁷ Pa·S at 1,250 °F (677 °C) and a viscosity of approximately 1.0 × 10⁵ at 1,650 °F (899 °C).

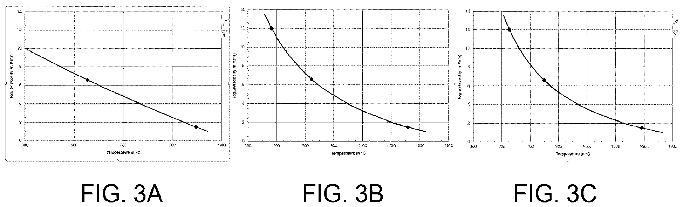

With brief reference to FIG. 3A-C, in various embodiments, the first glass compound can have a viscosity temperature profile in accordance with FIG. 3A, the second glass compound can have a viscosity temperature profile in accordance with FIG. 3C, and the third glass compound can have a viscosity temperature profile in accordance with FIG. 3B. Although described herein as comprising three glass compounds in the glass mixture, the present disclosure is not limited in this regard. For example, the glass mixture could include only two of the three glass compounds shown in FIGs. 3A-C, the glass mixture could include additional glass compounds, or the like.

In various embodiments, the first glass compound of the glass mixture comprises a phosphate-based glass. For example, the phosphate-based glass can comprise in mol percentage of the first glass compound, about 1.0% SiO₂, about 6.5% B₂O₃, about 0.8% Al₂O₃, about 12% MgO, about 3.5% BaO, about 20% Li₂O, about 0.1% F, and about 56% P₂O₅. As used in previous context only, the term "about" means ±1.0 mol percent. In various embodiments, the first glass compound may form approximately 20% ± 10 weight percent of the glass mixture.

In various embodiments, the second glass compound of the glass mixture comprises a first borosilicate glass. For example, the second glass compound can comprise, in mol percentage of the second glass compound, about 75% SiO₂, about 21% B₂O₃, about 2% Al₂O₃, and about 2% Na₂O. As used in previous context only, the term "about" means ±1.0 mol percent. In various embodiments, the second glass compound may form approximately 30% ± 10 weight percent of the glass mixture.

In various embodiments, the third glass compound of the glass mixture comprises a second borosilicate glass. For example, the third glass compound can comprise, in mol percentage of the third glass compound, about 61% SiO₂, about 27% B₂O₃, about 1% BaO, about 1% Li₂O, about 1% Na₂O, and about 0.5% K₂O. As used in previous context only, the term "about" means ±1.0 mol percent. In various embodiments, the third glass compound may form approximately 50% ± 20 weight percent of the glass mixture.

In various embodiments, a working point of the first glass compound is between 1450 °F (788 °C) and 1650 °F (899 °C), or approximately 1575 °F (857 °C). In various embodiments, a working point of the second glass compound is between 2,200 °F (1,204 °C) and 2,400 °F (1,316 °C), or approximately 2,285 °F (1,252 °C). In various embodiments, a working point of the third glass compound is between 1,950 °F (1,066 °C) and 2,150 °F (1,177 °C). "Working point" as referred to herein, is a temperature when a viscosity of the glass compound is 1.0 × 10³ Pa·S.

In various embodiments, a weight percentage of the glass mixture in the metal boride slurry may be between about 5.0% and about 50.0%, between about 10.0% and about 35.0%, between about 24.0% and about 26.0%, or between about 27.0% and about 29.0%. As used in previous context only, the term "about" means ±1.0 weight percent. In various embodiments, the glass mixture may form approximately 25.0% of the weight percentage of the metal boride slurry. As used in the previous context only, the term "approximately" means ±0.50 weight percent.

In various embodiments, the silica glass former may include colloidal silica, metal silicates, alkyl silicates, and/or amorphous or crystalline silica. In various embodiments, the silica glass former is a colloidal silica suspension having 40.0% by weight silica. In various embodiments, the silica glass former may be silicon (Si) powder. The silica glass former may form between about 10.0% and about 40.0%, between about 20.0% and about 30.0%, or between about 24.0% and about 28.0% of the weight percentage of the metal boride slurry. As used the previous context only, the term "about" means ±1.0 weight percent. In various embodiments, the silica glass former may form approximately 25.0% of the weight percentage of the metal boride slurry. As used the previous context only, the term "approximately" means ±0.5 weight percent.

In various embodiments, the metal boride slurry may also comprise a glass modifier. The glass modifier may include an alkaline earth metal compound such as, for example, calcium oxide (CaO), calcium carbonate (Ca(CO₃)₂), magnesium oxide (MgO), magnesium carbonate (Mg(CO₃)₂), a zirconium compound such as, for example, zirconium oxide (ZrO), zirconium carbonate (Zr(CO₃)₂), and/or an aluminum compound such as aluminum oxide (Al₂O₃). The glass modifier reacts with the borosilicate glass and refractory oxides that may form during oxidation, thereby resulting in a more stable and/or denser glass ceramic coating at associated temperature range. In various embodiments, the glass modifier may form between about 0.5% and about 10.0%, between about 1.0% and about 5.0%, between about 3.0% and about 4.0%, or between about 1.0% and about 2.0% of the weight percentage of the metal boride slurry. As used the previous context only, the term "about" means ±1.0 weight percent.

In various embodiments, the metal boride slurry may also comprise monoaluminium phosphate. The monoaluminium phosphate may be in the form of a solution (e.g., monoaluminium phosphate and a carrier fluid) of any suitable make-up. In various embodiments, the monoaluminium phosphate solution may comprise about 50% by weight monoaluminium phosphate and about 50% by weight carrier fluid (e.g., water). In the previous context only, the term "about" means ±10.0 weight percent. In various embodiments, the monoaluminium phosphate solution may form between about 1.0% and about 10.0%, between about 2.0% and about 5.0%, or between about 3.0% and about 4.0% of the weight percentage of the boron slurry. As used the previous context only, the term "about" means ±1.0 weight percent. In various embodiments, the monoaluminium phosphate solution may form approximately 3.33% of the weight percentage of the boron slurry. As used the previous context only, the term "approximately" means ±0.5 weight percent. In various embodiments, the monoaluminium phosphate solution may form approximately 3.7% of the weight percentage of the boron slurry. As used the previous context only, the term "approximately" means ±0.5 weight percent.

In accordance with various embodiments, method 200 further comprises applying the boron slurry to a composite structure (step 220). Applying the boron slurry may comprise, for example, spraying or brushing the boron slurry to an outer surface of the composite structure. Any suitable manner of applying the boron slurry to the composite structure is within the scope of the present disclosure. As referenced herein, the composite structure may refer to a C/C composite structure. In accordance with various embodiments, the boron slurry may be applied directly on (i.e., in physical contact with) the surface of the composite structure.

In various embodiments, method 200 may comprise forming a silicon slurry (step 230) by combining a silicon compound, a glass compound, a silica glass former compound, a glass modifier, and oxygen inhibitor compound(s) with a carrier fluid (such as, for example, water). In various embodiments, the silicon compound may comprise at least one silicon-comprising refractory material (e.g., ceramic material). In various embodiments, the silicon compound may comprise silicon carbide, a silicide compound, silicon, silicon dioxide, silicon oxynitride, silicon carbonitride, combinations thereof.

In various embodiments, the silicon slurry may comprise from about 5.0% to about 30.0% by weight silicon compound, from about 10.0% to about 20.0% by weight silicon compound, from about 9.0% to about 11.0% by weight silicon compound, or from about 18.0% to about 20.0% by weight silicon compound. As used in previous context only, the term "about" means ±1.0 weight percent.

In various embodiments, the silicon compound is a powder (e.g., silicon powder or silicon carbide powder). The silicon compound powder may comprise particles having an average particle size of between about 100 nm and 50 µm, between 500 nm and 20 µm, between 500 nm and 1.5 µm, or between 16 µm and 18 µm. As used in previous context only, the term "about" means ±1.0 µm. In various embodiments, the silicon compound may comprise particles having an average particle size of approximately 0.7 µm. As used in the previous context only, the term "about" means ±0.25 µm. In various embodiments, the silicon compound may comprise particles having an average particle size of approximately 1.0 µm. As used in the previous context only, the term "about" means ±0.25 µm.

The glass compound (or the glass mixture) of the silicon slurry may be in accordance with the glass compound (or glass mixture) of the boron slurry described previously herein. In various embodiments, the glass compound (or the glass mixture) of the silicon slurry may be different from the glass compound (or glass mixture) of the boron slurry, but selected from the same list of glass compounds (or glass mixtures), described previously herein. The present disclosure is not limited in this regard.

In various embodiments, the silica glass former may include colloidal silica, metal silicates, alkyl silicates, and/or elemental silica. In various embodiments, the silica glass former is a colloidal silica suspension having 40.0% by weight silica. In various embodiments, the silica glass former may be silicon powder. The silica glass former may form between about 10.0% and about 40.0%, between about 20.0% and about 30.0%, between about 22.0% and about 24.0%, or between about 24.0% and 26.0% of the weight percentage of the silicon slurry. As used the previous context only, the term "about" means ±1.0 weight percent.

In various embodiments, the silicon slurry may also comprise monoaluminium phosphate. The monoaluminium phosphate may be in the form of a solution (e.g., monoaluminium phosphate and a carrier fluid) of any suitable make-up. In various embodiments, the monoaluminium phosphate solution may comprise about 50% by weight monoaluminium phosphate and about 50% by weight carrier fluid (e.g., water). In the previous context only, the term "about" means ± 10 weight percent. In various embodiments, the monoaluminium phosphate solution may form between about 1% and about 10%, between about 2% and about 5%, or between about 3% and about 4% of the weight percentage of the silicon slurry. As used the previous context only, the term "about" means ±1.0 weight percent. In various embodiments, the monoaluminium phosphate solution may form approximately 3.0 % of the weight percentage of the silicon slurry. As used the previous context only, the term "approximately" means ±0.5 weight percent. In various embodiments, the monoaluminium phosphate solution may form approximately 3.0 % of the weight percentage of the silicon slurry. As used the previous context only, the term "approximately" means ±0.5 weight percent.

In various embodiments, the silicon slurry may also comprise a glass modifier. The glass modifier may include an alkaline earth metal compound such as, for example, calcium boride (CaB₆), calcium oxide (CaO), calcium carbonate (Ca(CO₃)₂), magnesium boride (MgB₂), magnesium oxide (MgO), magnesium carbonate (Mg(CO₃)₂), a zirconium compound such as, for example, zirconium boride (ZrB₂), zirconium oxide (ZrO), zirconium carbonate (Zr(CO₃)₂), and/or an aluminum compound such as aluminum oxide (Al₂O₃). The glass modifier reacts with the borosilicate glass and refractory oxides that may form during oxidation, thereby resulting in a more stable and/or denser glass ceramic coating at associated temperature range. In various embodiments, the glass modifier may form between about 1.0% and about 15.0%, between about 3.0% and about 10.0%, or between about 5.0% and about 7.0% of the weight percentage of the silicon slurry. As used the previous context only, the term "about" means ±1.0 weight percent. In various embodiments, the glass modifier may form approximately 6.1% of the weight percentage of the silicon slurry. As used the previous context only, the term "approximately" means ±0.5 weight percent. In various embodiments, the glass modifier may form approximately 6.7% of the weight percentage of the silicon slurry. As used the previous context only, the term "approximately" means ±0.5 weight percent.

In various embodiments, the oxygen inhibitor of the silicon slurry comprises a metal boride. For example, the oxygen inhibitor can comprise at least one of calcium boride (CaB₆), magnesium boride (MgB₂), silicon boride (SiB₆), titanium boride (TiB₂), zirconium boride (ZrB₂) and/or any other metal boride. In various embodiments, the metal boride can form between about 1% and about 10%, between about 2% and about 5%, or between about 3% and about 4% of the weight percentage of the silicon slurry. However, the present disclosure is not limited in this regard.

In various embodiments, method 200 further comprises applying the silicon slurry to the composite structure (step 240). Applying the silicon slurry may comprise, for example, spraying or brushing the silicon slurry over the surface on which the boron slurry was applied (e.g., the silicon slurry is applied over the boron slurry). Any suitable manner of applying the silicon slurry to the composite structure is within the scope of the present disclosure. As referenced herein, the composite structure may refer to a C/C composite structure.

In various embodiments, method 200 may further comprise performing a high temperature cure (step 250) to form a boron-glass layer on the composite structure and a silicon-glass layer on the boron-glass layer. Step 250 may include heating the composite structure at a relatively high temperature, for example, a temperature of between 1200° F (649° C) to about 2000° F (1093° C), between about 1500° F (816° C) to about 1700° F (927° C), or about 1650° F (899° C), wherein the term "about" in previous context only means ±25° F (±4° C)). Step 250 may include heating the composite structure for about 5 minutes to about 8 hours, about 30 minutes to about 5 hours, or about 2 hours, wherein the term "about" in this context only means ±10 % of the associated value.

Not to be bound by theory, it is believed that boron components may become oxidized during service at high temperatures, thereby forming boria. The boria may come into contact with the silica glass former or oxidized silicon components to form a borosilicate in situ, providing a method of self-healing. "Self-healing," as referred to herein, is the process naturally performed by the oxidation protection system where a crack formed in the oxidation protection system is filled and/or at least partially sealed with a composition formed from a chemical reaction between elements of the oxidation protection system. For a boron-silicon oxidation protection system, the probability of boria reacting with oxidized silicon compounds is kinetically controlled and influenced by the amount of each component, surface area, aspect ratio, etc. Boria is also volatile, especially when hydrated to form boric acid, and may be lost during extended service time. Method 200 tends to increase the probability of self-healing borosilicate formation by creating a layer of silicon, glass, and glass former over the boron-glass layer that can reduce boria transportation in water prior to volatilization. The silica glass former in the boron-glass layer and in the silicon-glass layer may also react with the boron oxide forming, for example, borosilicate glass, laminboard glass, borophosphate glass, etc. in the boron-glass and/or silicon-glass layers. The silica reacting with the boron oxide, tends to decrease or eliminate unreacted boron oxide, thereby increasing the water stability of the oxidation protection system.

In various embodiments method 200, may further comprise applying at least one of a pretreating composition or a barrier coating (step 205) prior to applying the first slurry. Step 205 may, for example, comprise applying a first pretreating composition to an outer surface of a composite structure, such as a component of aircraft wheel brake assembly 10. In various embodiments, the first pretreating composition comprises an aluminum oxide in water. For example, the aluminum oxide may comprise an additive, such as a nanoparticle dispersion of aluminum oxide (for example, NanoBYK-3600^{®} sold by BYK Additives & Instruments). The first pretreating composition may further comprise a surfactant or a wetting agent. The composite structure may be porous, allowing the pretreating composition to penetrate at least a portion of the pores of the composite structure.

In various embodiments, after applying the first pretreating composition, the component may be heated to remove water and fix the aluminum oxide in place. For example, the component may be heated between about 100° C. (212° F) and 200° C. (392° F), and further, between 100° C. (212° F.) and 150° C. (302° F).

In various embodiments, the pretreatment composition may comprise monoaluminium phosphate. The monoaluminium phosphate may be in the form of a solution (e.g., monoaluminium phosphate and a carrier fluid) of any suitable make-up. In various embodiments, the monoaluminium phosphate solution may comprise about 50% by weight monoaluminium phosphate and about 50% by weight carrier fluid (e.g., water). In the previous context only, the term "about" means ± 10 weight percent. In various embodiments, after applying the pretreatment composition, the composite structure is heated to remove carrier fluid and fix the monoaluminium phosphate over the composite structure. In accordance with various embodiments, method 300 may include applying the boron slurry (step 220) after heating the composite structure to remove the carrier fluid (e.g., water) of the pretreatment composition.

Step 205 may further comprise applying a second pretreating composition. In various embodiments, the second pretreating composition comprises a phosphoric acid and an aluminum phosphate, aluminum hydroxide, and/or aluminum oxide. The second pretreating composition may further comprise, for example, a second metal salt such as a magnesium salt. In various embodiments, the aluminum to phosphorus molar ratio of the aluminum phosphate is 1 to 3 or less by weight. Further, the second pretreating composition may also comprise a surfactant or a wetting agent. In various embodiments, the second pretreating composition is applied to the composite structure atop the first pretreating composition. The composite structure may then, for example, be heated. In various embodiments, the composite structure may be heated between about 600° C. (1112° F) and about 800° C. (1472° F), and further, between about 650° C. (1202° F) and 750° C. (1382° F).

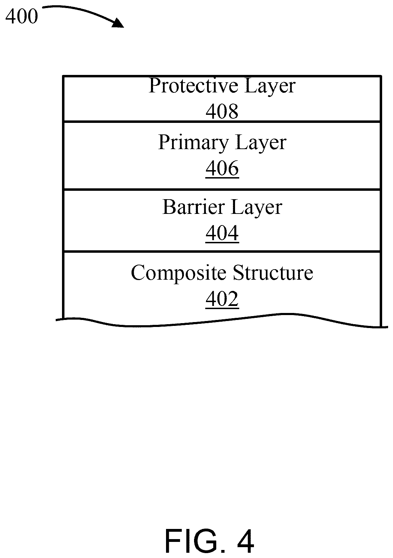

Referring now to FIG. 4, an oxidation protection system 400 of a composite structure 402 (e.g., a C/C composite structure as described previously herein). In various embodiments, the oxidation protection system 400 is formed via method 200 described previously herein. For example, the barrier layer 404 can be at least partially formed by step 205 described previously herein, the main layer 406 can be at least partially formed by steps 210, 220, 225 of method 200, and the protective layer 408 can be at least partially formed by steps 230, 240, 245, and the oxidation protection system 400 can be formed by step 250.

In various embodiments, the oxidation protection system 400 disclosed herein facilitates enhanced oxidation performance across a broad temperature range. In various embodiments, by combining different types of oxygen getters as additives (e.g., metal borides) in the coating system, the oxidation protection system 400 can effectively self-heal at coating cracks where oxygen diffuses in through forming oxides that can lower the viscosity of the glassy matrix of the oxidation protection system 400.

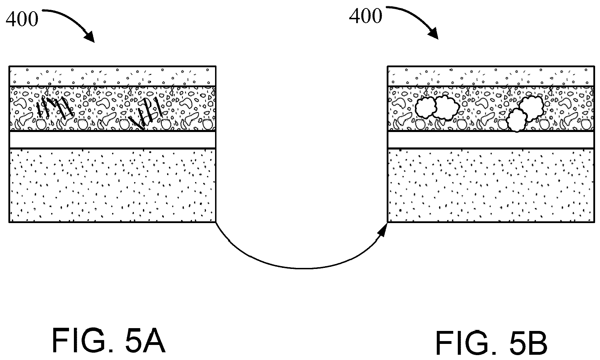

In various embodiments, the primary layer 406 formed from the metal boride slurry in steps 210, 220 of method 200, is configured to provide an oxygen barrier with an oxygen inhibitor phase and a self-healing phase. For example, with reference now to FIGs. 5A and 5B, in response to a crack being formed through the primary layer 406, oxygen may enter the cracks (as shown in FIG. 5A), the oxygen can react with the metal boride 502 to form an oxide (e.g., calcium boride reacts to form calcium oxide, magnesium boride reacts to form magnesium oxide, etc.), the oxide then mixes with the glass mixture, lowering the viscosity of the glass mixture as the crack self-heals (i.e., re-forms).

Benefits and other advantages have been described herein with regard to specific embodiments. Furthermore, the connecting lines shown in the various figures contained herein are intended to represent exemplary functional relationships and/or physical couplings between the various elements. It should be noted that many alternative or additional functional relationships or physical connections may be present in a practical system. However, the benefits, advantages, solutions to problems, and any elements that may cause any benefit, advantage, or solution to occur or become more pronounced are not to be construed as critical, required, or essential features or elements of the disclosure. The scope of the disclosure is accordingly to be limited by nothing other than the appended claims, in which reference to an element in the singular is not intended to mean "one and only one" unless explicitly so stated, but rather "one or more." Moreover, where a phrase similar to "at least one of A, B, or C" is used in the claims, it is intended that the phrase be interpreted to mean that A alone may be present in an embodiment, B alone may be present in an embodiment, C alone may be present in an embodiment, or that any combination of the elements A, B and C may be present in a single embodiment; for example, A and B, A and C, B and C, or A and B and C.

Systems, methods and apparatus are provided herein. In the detailed description herein, references to "one embodiment," "an embodiment," "an example embodiment," etc., indicate that the embodiment described may include a particular feature, structure, or characteristic, but every embodiment may not necessarily include the particular feature, structure, or characteristic. Moreover, such phrases are not necessarily referring to the same embodiment. Further, when a particular feature, structure, or characteristic is described in connection with an embodiment, it is submitted that it is within the knowledge of one skilled in the art to affect such feature, structure, or characteristic in connection with other embodiments whether or not explicitly described. After reading the description, it will be apparent to one skilled in the relevant art(s) how to implement the disclosure in alternative embodiments.

Furthermore, no element, component, or method step in the present disclosure is intended to be dedicated to the public regardless of whether the element, component, or method step is explicitly recited in the claims. As used herein, the terms "comprises," "comprising," or any other variation thereof, are intended to cover a non-exclusive inclusion, such that a process, method, article, or apparatus that comprises a list of elements does not include only those elements but may include other elements not expressly listed or inherent to such process, method, article, or apparatus.

## Claims

1. A method for forming an oxidation protection system on a carbon-carbon composite structure, comprising:
applying (220) a boron slurry to the carbon-carbon composite structure, wherein the boron slurry comprises a boron composition, a first glass compound, a first glass former, a first glass modifier, and a first carrier fluid, the boron composition including a first metal boride;
applying a silicon slurry (240) to the carbon-carbon composite structure, wherein the silicon slurry comprises a silicon compound, a second glass compound, a second glass former, a second glass modifier, an oxygen inhibitor, and a second carrier fluid; and
heating (250) the carbon-carbon composite structure.

2. The method of claim 1, wherein the oxygen inhibitor comprises a second metal boride.

3. The method of any preceding claim, wherein the first metal boride comprises 100% by weight of the boron composition.

4. The method of any preceding claim, wherein the boron composition further comprises at least one of boron carbide and boron nitride, and optionally wherein the first metal boride comprises between 25% and 100% by weight of the boron composition.

5. The method of any preceding claim, wherein the first metal boride comprises one of calcium boride (CaB₆), magnesium boride (MgB₂), silicon boride (SiB₆), titanium boride (TiB₂), zirconium boride (ZrB₂), and hafnium boride (HfB₂).

6. The method of any preceding claim, wherein the boron slurry further comprises a third glass compound that forms a glass mixture with the first glass compound, wherein the third glass compound has a viscosity-temperature profile that is at least two orders of magnitude more than the first glass compound.

7. The method of claim 6, wherein:
the first glass compound includes a phosphate-based glass, and
the third glass compound includes a first borosilicate glass, and optionally wherein:
the glass mixture comprises a fourth glass compound,
the fourth glass compound comprises a second borosilicate glass, and
the second borosilicate glass has a different viscosity-temperature profile from the first borosilicate glass.

8. A method for forming an oxidation protection system on a brake disk, comprising:
forming a boron slurry by mixing a first metal boride, a first glass compound, a first glass former, a first glass modifier, and a first carrier fluid;
applying the boron slurry over a non-wear surface of the brake disk;
forming a silicon slurry by mixing a silicon compound, a second glass compound, a second glass former, a second glass modifier, an oxygen inhibitor, and a second carrier fluid, the oxygen inhibitor including a second metal boride;
applying the silicon slurry over the non-wear surface of the brake disk; and
heating the brake disk at a first temperature.

9. The method of claim 8, wherein the boron slurry is without boron nitride and carbon nitride.

10. The method of claim 8 or 9, wherein the first metal boride comprises one of calcium boride (CaB₆), magnesium boride (MgB₂), silicon boride (SiB₆), titanium boride (TiB₂), zirconium boride (ZrB₂), and hafnium boride (HfB₂).

11. The method of any of claims 8 to 10, wherein the boron slurry further comprises a third metal boride, wherein the third metal boride is different from the second metal boride.

12. The method of claim 10, wherein the boron slurry further comprises at least one of boron carbide and boron nitride, and optionally wherein the boron slurry comprises the boron carbide and the boron nitride, and wherein the boron carbide, the boron nitride, and the first metal boride form a boron composition, and wherein the first metal boride comprises between 25% and 100% by weight of the boron composition.

13. An oxidation protection system disposed on an outer surface of a substrate, the oxidation protection system, comprising:
a boron-glass layer disposed over the outer surface, the boron-glass layer comprising a boron composition, a first glass mixture, a first glass former, and a first glass modifier, the boron composition including a first metal boride disposed therein; and
a silicon-glass layer disposed on the boron-glass layer, the silicon-glass layer including a second metal boride disposed therein.

14. The oxidation protection system of claim 13, wherein the boron-glass layer further comprises at least one of boron nitride and boron carbide, and optionally wherein:
the boron-glass layer further comprises the boron nitride and the boron carbide;
the first metal boride comprises between 25% and 100% by weight of the boron composition, and
the boron composition includes the boron nitride, the boron carbide, and the first metal boride.

15. The oxidation protection system of claim 13 or 14, wherein the first metal boride comprises one of calcium boride (CaB₆), magnesium boride (MgB₂), silicon boride (SiB₆), titanium boride (TiB₂), zirconium boride (ZrB₂), and hafnium boride (HfB₂), and/or wherein the second metal boride comprises one of calcium boride (CaB₆), magnesium boride (MgB₂), silicon boride (SiB₆), titanium boride (TiB₂), zirconium boride (ZrB₂), and hafnium boride (HfB₂).
